# EUROPEAN PATENT APPLICATION

(11) **EP 4 570 668 A1**
(43) Date of publication of application: **18.06.2025**
(21) Application number: 23852899.6
(22) Date of filing: 04.08.2023
(51) Int. Cl.: B64F 1/22, B64C 39/02, G01W 1/02, B64U 80/00

(54) **LOW-IMPACT LANDING SYSTEM FOR ROTARY WING AIRCRAFT**

(30) Priority: 08.08.2022 KR 20220098845
(71) Applicant: Soomvi Co., Ltd., Incheon 21984 (KR)
(72) Inventor: OH, In Seon, Incheon 22364 (KR)
(74) Representative: Gille Hrabal Partnerschaftsgesellschaft mbB Patentanwälte
(86) International application number: PCT/KR2023/011526
(87) International publication number: WO 2024/035019

(57) **Abstract**

The invention is a low-impact landing system for a rotary wing aircraft comprising a landing pad 110 having a landing surface 111 for landing the rotary wing aircraft 10, an inclination drive unit120 on the landing pad 110 to support the landing pad 110 and adjust the horizontal inclination of the landing pad 110 according to a control signal, a ground communication unit 130 for receiving an airframe inclination detection signal detected by an airframe inclination detection unit 15 on the rotary wing aircraft 10, and a drive control unit 140 to control the inclination drive unit120 according to the airframe inclination detection signal so that each landing gear 12 of the rotary wing aircraft 10 contacts the landing surface 111 of the landing pad 110 at the same timing.

## Description

### Technical Field

The invention relates to a low-impact landing system for a rotary wing aircraft, and more specifically, to a low-impact landing system for a rotary wing aircraft capable of reducing landing impact transmitted to the airframe when the landing gear lands on a landing surface during landing of the rotary wing aircraft.

### Background Art

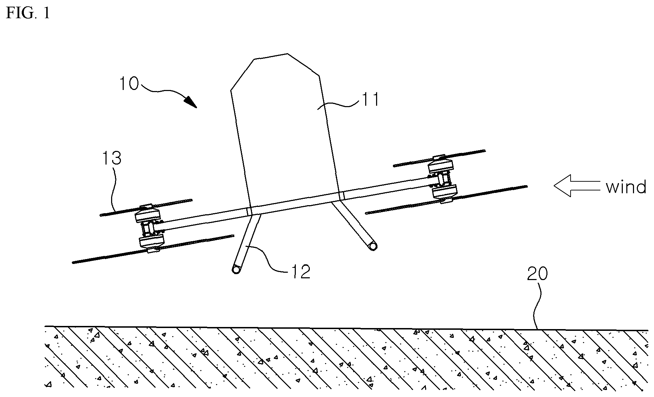

In general, a rotary wing aircraft is an aircraft that flies by generating lift required for flight by a rotating propeller, and representative examples include a drone multi-copter or a helicopter. As shown in Fig. 1, such a rotary wing aircraft 10 has a propeller 13 mounted on an airframe 11 and a landing gear 12 mounted on the lower part of the aircraft airframe 11 to stably support the airframe 11 when landing, and a plurality of landing gears 12 are spaced apart on the left and right to prevent the airframe 11 from easily capsizing when landing.

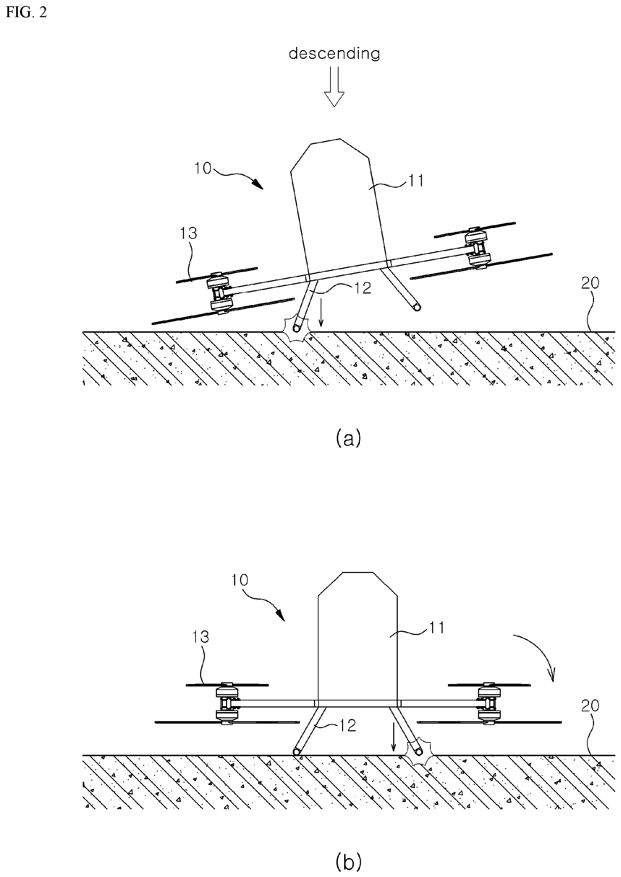

In addition, when a rotary wing aircraft 10 experiences an external disturbance such as wind or external impact while descending and landing on the ground 20, due to its flight characteristics, a situation may occur where the airframe 11 is inclined and the landing gear 12 lands on the ground 20. In this case, as shown in (a) of FIG. 2, the landing gear 12 on the side where the airframe 11 is inclined first contacts the ground 20, causing a primary landing impact, and then as shown in b of FIG. 2, the landing gear 12 on the opposite side contacts the ground 20, causing a secondary landing impact.

This landing impact is transmitted to the passengers inside the airframe 11, which not only creates a sense of insecurity, but also causes damage or malfunction to the electronic components inside. Furthermore, if the airframe 11 is excessively inclined, the airframe 11 turns around the landing gear 12 that already contacted the ground 20 and the airframe 11 may overturn, which causes damage to the rotary wing aircraft 10 or a fatal accident.

### Disclosure

### Technical Problems

The invention has been created to solve the above-described problems, and an object of the invention is to provide a low-impact landing system for a rotary wing aircraft, which can significantly reduce landing impact transmitted to the airframe during landing by allowing each landing gear to land at the same timing while adjusting the horizontal inclination of the landing pad according to the inclined state of the aircraft's body.

### Technical Solution

According to one feature of the invention, there is provided a low-impact landing system for a rotary wing aircraft for reducing landing impact transmitted to the aircraft airframe 11 when the rotary wing aircraft 10 lands, which comprises: a landing pad 110 having a landing surface 111 formed on the upper portion for landing the rotary wing aircraft 10; an inclination drive unit120 positioned at a lower position of the landing pad 110 to support the landing pad 110 and drive according to a control signal to adjust the horizontal inclination of the landing pad 110; a ground communication unit 130 for receiving an airframe inclination detection signal detected by an airframe inclination detection unit 15 positioned on the rotary wing aircraft 10; and a drive control unit 140 that controls the inclination drive unit120 according to the airframe inclination detection signal so that each landing gear 12 of the rotary wing aircraft 10 contacts the landing surface 111 of the landing pad 110 at the same timing.

According to another feature of the invention, there is provided a low-impact landing system for a rotary wing aircraft, wherein the inclination drive unit120 includes a base plate 121 that is fixedly installed and spaced downward from a landing pad 110, and a plurality of actuators 122 that are installed spaced apart from each other along the perimeter of the landing pad 110 and are extended vertically between the base plate 121 and the landing pad 110 to actuate the landing pad 110 up and down while performing an extension and contraction operation according to a control signal of a drive control unit 140, and the drive control unit 140 individually controls each actuator 122 so that the landing pad 110 performs a roll operation and a tilt operation to be adjusted horizontally by the extension and contraction operation of each actuator 122 according to a received airframe inclination detection signal.

According to another feature of the invention, there is provided a low-impact landing system for a rotary wing aircraft, wherein the landing pad inclination detection unit 191 is further included, which is arranged on the landing pad 110 or the inclination drive unit 120 and outputs a detection signal necessary to calculate a landing pad inclination angle (θ2) at which the landing pad 110 is inclining with respect to the horizontal plane, and the drive control unit 140 receives the airframe inclination detection signal of the airframe inclination detection unit 15 to calculate the airframe inclination angle (θ1) at which the airframe 11 is inclining with respect to the horizontal plane, receives the detection signal of the landing pad inclination detection unit 191 to calculate the landing pad inclination angle (θ2), and individually controls each actuator 122 of the inclination drive unit 120 so that the landing pad inclination angle (θ2) becomes equal to the airframe inclination angle (θ1).

According to another feature of the invention, there is provided a low-impact landing system for a rotary wing aircraft, wherein the ground communication unit 130 receives the airframe position information of the airframe 11 detected by the airframe position detection unit 17 arranged on the rotary wing aircraft 10, and the drive control unit 140 starts controlling the inclination drive unit 120 when the rotary wing aircraft 10 approaches the landing pad 110 within a set distance according to the received airframe position information of the airframe 11, and individually controls each actuator 122 so that the landing pad 110 should move horizontally by the extension and contraction of each actuator 122 according to the received airframe position information, and the landing gear 12 of the rotary wing aircraft 10 should land toward the center position of the landing surface 111.

According to another feature of the invention, there is provided a low-impact landing system for a rotary wing aircraft, wherein the landing pad 110 has a size that is relatively larger than or corresponding to the opening 21 formed in the ground 20, the ground communication unit 130 receives the airframe position information detected by the airframe position detection unit 17 arranged in the rotary wing aircraft 10, and the drive control unit 140 controls the landing pad 110 arranged horizontally on the same line as the ground 20 to rise to a set height when the rotary wing aircraft 10 approaches the landing pad 110 within a set distance according to the airframe position information of the received airframe position detection unit 17, and the horizontal inclination of the landing pad 110 is adjusted according to the airframe inclination detection signal of the airframe inclination detection unit 15 so that each landing gear 12 comes into contact with the landing surface 111 at the same timing, and when the rotary wing aircraft 10 lands on the landing pad 110, each actuator 122 is controlled to descend so that the landing pad 110 should become horizontal and be positioned on the same line as the ground 20.

According to another feature of the invention, there is provided a low-impact landing system for a rotary wing aircraft, wherein it further includes a wind detection unit 170 installed on the ground 20 spaced a certain distance from the landing pad 110 to detect the wind direction and wind speed applied toward the landing pad 110, and the drive control unit 140 controls the inclination drive unit 120 to further incline the horizontal level of the landing pad 110 in the direction in which the airframe 11 of the rotary wing aircraft 10 is predicted to incline due to the wind according to the wind detection signal received from the wind detection unit 170.

According to another feature of the invention, there is provided a low-impact landing system for a rotary wing aircraft, wherein exhaust holes 112 are formed on the landing pad 110 to discharge the air wind generated by the rotation of the propeller 13 provided on the rotary wing aircraft 10 and directed the air wind being toward the landing surface 111 to the lower part of the landing pad 110, and an exhaust window 180 is further formed to discharge the air wind discharged downward through the exhaust holes 112 to the outside, which is arranged in the lower space of the landing pad 110.

### Advantageous Effect

According to the invention as described above, advantageous effects as follows are achieved. First, a landing surface 111 for landing a rotary wing aircraft 10 is formed on the upper part of the landing pad 110, and an inclination drive unit 120 is arranged at a lower position of the landing pad 110 to support the landing pad 110 and adjust the horizontal inclination of the landing pad 110 according to a control signal, a ground communication unit 130 receives an airframe inclination detection signal detected by an airframe inclination detection unit 15 arranged on the rotary wing aircraft 10, and a drive control unit 140 controls the inclination drive unit 120 according to the received airframe inclination detection signal so that the horizontal inclination of the landing pad 110 is adjusted so that each landing gear 12 arranged on the lower part of the rotary wing aircraft 10 comes into contact with the landing surface 111 of the landing pad 110 at the same timing, thereby distributing the landing impact generated during landing to each landing gear 12 and significantly reducing it. So, it is possible to prevent in advance the phenomenon of the airframe 11 overturning when landing in an inclined state.

Second, the inclination drive unit 120 includes a base plate 121 that is fixedly installed and spaced downward from the landing pad 110, and a plurality of actuators 122 that are installed spaced apart from each other along the perimeter of the landing pad 110 and are extended vertically, that is, up and down between the base plate 121 and the landing pad 110 and pressurize the landing pad 110 up and down while performing an extension and contraction operation according to a control signal of the drive control unit 140, and the drive control unit 140 individually controls each actuator 122 according to the received airframe inclination detection signal so that the horizontal inclination of the landing pad 110 is adjusted while the landing pad 110 performs a roll operation and a tilt operation by the extension and contraction operation of each actuator 122, thereby enabling precise and rapid adjustment of the horizontal inclination of the landing pad 110, and if the actuators 122 are installed in a Stewart Platform structure with an inclined vertical extension arrangement, there is an advantage in that the landing pad 110 can be controlled with various movements such as yaw movement, horizontal movement, and lift movement in addition to roll and tilt movements. In addition, in the case of an actuator 122 using hydraulic or pneumatic pressure, the load of the airframe 11 can be reduced by a momentary compression movement when the airframe 11 lands on the landing surface 111, thereby further reducing the landing impact.

Third, the landing pad inclination detection unit 191 is arranged on the landing pad 110 or the inclination drive unit 120 and outputs a detection signal necessary to calculate the landing pad inclination angle (θ2) at which the landing pad 110 is inclining with respect to the horizontal plane, and the drive control unit 140 receives the airframe inclination detection signal of the airframe inclination detection unit 15 to calculate the airframe inclination angle (θ1) at which the airframe 11 is inclining with respect to the horizontal plane, receives the detection signal of the landing pad inclination detection unit 191 to calculate the landing pad inclination angle (θ2), and individually controls each actuator 122 of the inclination drive unit 120 so that the landing pad inclination angle (θ2) becomes the same as the airframe inclination angle (θ1), thereby synchronizing the inclination of the airframe 11 and the inclination of the landing surface 111 in real time. There is an advantage in that the horizontal inclination of the landing surface 111 can be precisely controlled.

Fourth, the ground communication unit 130 receives the airframe position information of the airframe 11 detected by the airframe position detection unit 17 arranged on the rotary wing aircraft 10, and the drive control unit 140 starts controlling the inclination drive unit 120 when the rotary wing aircraft 10 approaches the landing pad 110 within a set distance according to the received airframe position information of the airframe 11, and individually controls each actuator 122 so that the landing pad 110 moves horizontally by the extension and contraction of each actuator 122 according to the received airframe position information, and the landing gear 12 of the rotary wing aircraft 10 lands toward the center of the landing surface 111, thereby preventing the rotary wing aircraft 10 from landing on the outer part of the landing pad 110 or on the ground 20 separated from the landing pad 110, and it is possible to prevent the load from being applied unevenly to the landing pad 110.

Fifth, the landing pad 110 has a size that is relatively larger than or corresponding to the opening 21 formed on the ground 20, so that no space is created between the landing pad 110 and the opening 21, thereby preventing the legs of a person getting off the rotary wing aircraft 10 from falling into the gap, and the ground communication unit 130 receives the airframe position information detected by the airframe position detection unit 17 arranged on the rotary wing aircraft 10, and the drive control unit 140 controls the landing pad 110, which is horizontally arranged on the same line as the ground 20, to rise to the set height when the rotary wing aircraft 10 approaches the landing pad 110 within a set distance according to the airframe position information of the received airframe position detection unit 17, and the horizontal inclination of the landing pad 110 is adjusted according to the airframe inclination detection signal of the airframe inclination detection unit 15, so that each landing gear 12 comes into contact with the landing surface 111 at the same timing. And by controlling each actuator 122 so that when the rotary wing aircraft 10 lands on the landing pad 110, the landing pad 110 becomes horizontal and descends to be positioned on the same line as the ground 20, there is no need for the user ground worker or pilot to operate the landing pad 110 to match the timing at which the landing pad 110 should be driven according to the approach of the rotary wing aircraft 10, and the horizontal inclination of the landing pad 110 can be adjusted to prevent the landing pad 110 from coming into contact with the opening 21.inc

Sixth, the wind detection unit 170 is installed on the ground 20 a certain distance away from the landing pad 110 to detect the wind direction and wind speed of the wind blowing toward the landing pad 110, and the drive control unit 140 controls the inclination drive unit 120 so that the horizontal level of the landing pad 110 is further inclined in the direction in which the airframe 11 of the rotary wing aircraft 10 is predicted to be inclined due to the wind according to the wind detection signal received from the wind detection unit 170, thereby guiding each landing gear 12 to come into contact with the landing surface 111 at the same timing even if wind is applied to the airframe 11 at the moment when the landing gear 12 is about to land on the landing surface 111.

Seventh, an exhaust holes 112 are formed in the landing pad 110 to discharge the air wind generated by the rotation of the propeller 13 of the rotary wing aircraft 10 and directed to the lower part of the landing pad 110, and an exhaust window 180 is arranged in the lower space of the landing pad 110 to discharge the air wind discharged downward through the exhaust holes 112 to the outside, thereby minimize the shaking of body during landing when the air wind reflected upward by the landing surface 111 of the landing pad 110 is applied to the airframe 11.

### Description of the Drawing

Figure 1 is a front view showing the configuration of a typical rotary wing aircraft.
Figure 2 is a front view showing a situation where two landing impacts occur while the aircraft is landing in an inclined state.
Figures 3 and 4 are a front view and a plan view showing the configuration of a low-impact landing system for a rotary wing aircraft according to a preferred embodiment of the invention.
Figure 5a is a perspective view showing the configuration of a inclination drive unit according to a preferred embodiment of the invention.
Figure 5b is a cross-sectional side view showing another configuration of a inclination drive unit according to a preferred embodiment of the invention.
Figure 6a is a front view showing a state in which the horizontal inclination of the landing pad is adjusted to incline to the left along the aircraft by a inclination drive unit according to a preferred embodiment of the invention.
Figure 6b is a front view showing a state in which the horizontal inclination of the landing pad is adjusted to incline to the right along the aircraft by the inclination drive unit according to a preferred embodiment of the invention.
Figure 7 is a front view showing a state in which a landing gear moves horizontally by an inclination drive unit according to a preferred embodiment of the invention.
Figures 8 to 10 are front views showing the operating principle of a low-impact landing system for a rotary wing aircraft according to a preferred embodiment of the invention.
Figure 11 is a front view showing the configuration of a wind sensor according to a preferred embodiment of the invention.
FIG. 12 is a front view showing the configuration of exhaust holes and exhaust window formed on a landing pad according to a preferred embodiment of the invention.

### Detailed Description of the invention

The above-described objects, features and advantages of the invention will become more apparent through the following detailed description. Hereinafter, preferred embodiments of the invention will be described with reference to the attached drawings.

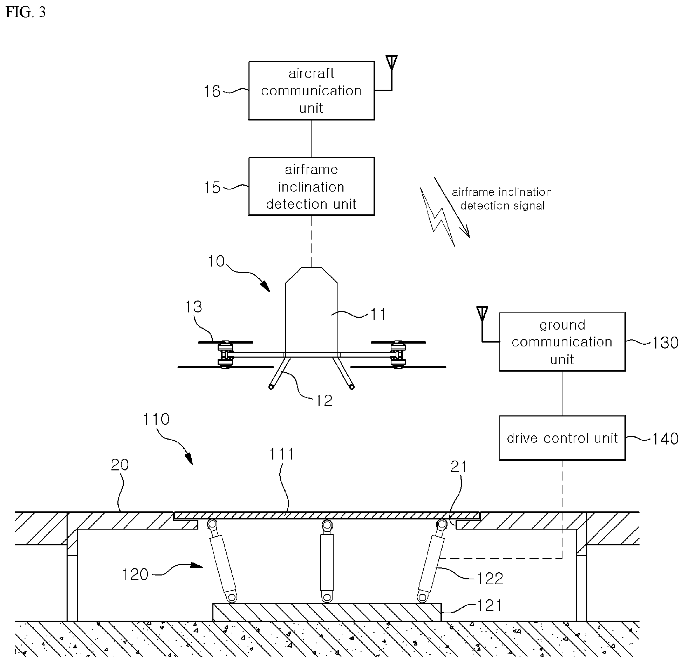

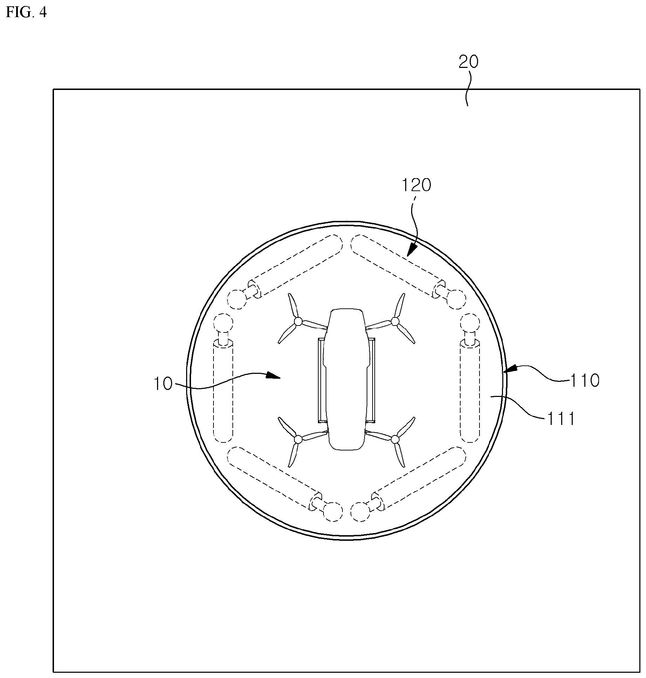

A low-impact landing system for a rotary wing aircraft according to the invention is a landing system capable of significantly reducing landing impact transmitted to the aircraft during landing by allowing each landing gear to land at the same timing even when the rotary wing aircraft is inclined, and includes a landing pad 110, an inclination drive unit 120, a ground communication unit 130, and a drive control unit 140 as illustrated in FIGS. 3 and 4.

First, the landing pad 110 is formed with a landing surface 111 on the upper portion for the rotary wing aircraft 10 to land, thereby providing a landing space. Here, the drawing illustrates that the landing pad 110 is formed in a disk shape, but is not limited thereto, and the landing surface 111 may be formed in various shapes such as a square, triangle, and oval under flat conditions. In addition, a design and letters may be displayed on the landing surface 111 to indicate that it is a landing place for a rotary wing aircraft 10.

The above-mentioned inclination drive unit120 is a configuration that provides driving force necessary to adjust the horizontal inclination of the landing pad 110, is positioned at the lower position of the landing pad 110, supports the lower portion of the landing pad 110, and adjusts the horizontal inclination of the landing pad 110 by driving according to a control signal of the driving control unit 140.

Here, as shown in FIGS. 3 to 5a, the inclination drive unit 120 may include a base plate 121 that is fixedly installed and spaced downward from the landing pad 110, and a plurality of actuators 122 that are installed spaced apart from each other along the perimeter of the landing pad 110 and extend vertically or up and down between the base plate 121 and the landing pad 110 and press the landing pad 110 up and down while performing an extension operation according to a control signal of the drive control unit 140.

The above drive control unit 140 individually controls each actuator 122 according to the received airframe inclination detection signal so that the horizontal inclination is adjusted while the landing pad 110 performs roll and tilt operations by the expansion and contraction of each actuator 122.

In addition, as shown in the drawing, the lower part of each actuator 122 may be coupled to one base plate 121, and a plurality of base plate 121 may be provided, and one or more actuators 122 may be coupled to each base plate 121.

In addition, although not shown, a high-strength protective plate may be provided on the lower part of the landing pad 110 to which the upper part of each actuator 122 is rotatably connected, thereby protecting the landing pad 110 from damage by the pressure of the actuator 122.

In addition, the actuator 122 may be configured as a cylinder structure whose length is flexibly adjusted by moving a load 123 using hydraulic or pneumatic pressure, and the lower part is rotatably coupled to a base plate 121 and the upper part is rotatably coupled to a lower part of a landing pad 110, so that the horizontal inclination of the landing pad 110 is preferably adjusted according to the driving distance that is extended and contracted.

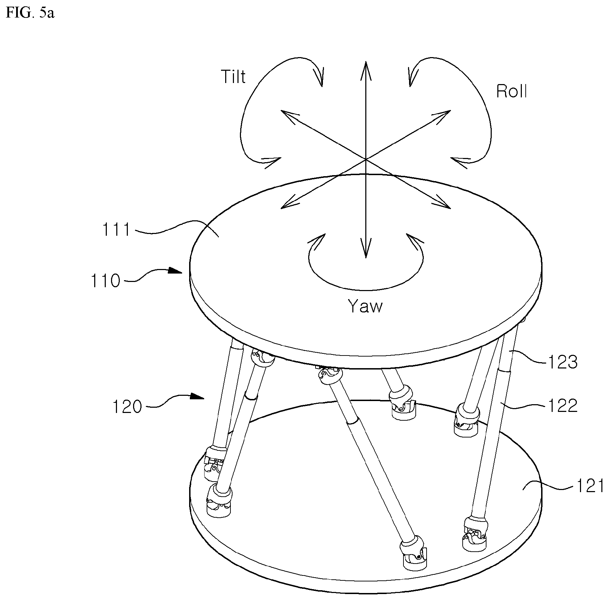

Therefore, referring to Fig. 5a, by individually adjusting the length of extension of each actuator 122 supporting the lower part of the landing pad 110, the horizontal inclination of the landing pad 110 with respect to the horizontal plane while performing a roll operation and a tilt operation can be adjusted. In addition, by simultaneously increasing the length of each actuator 122, the landing pad 110 can be moved upward, and by simultaneously decreasing the length of each actuator 122, the landing pad 110 can be moved downward.

In addition, if each actuator 122 is installed in a Stewart Platform structure with vertical extensions inclined as shown in FIGS. 4 and 5a, the landing pad 110 can be yawed and moved horizontally in addition to the roll and tilt operations. In addition, if the actuator 122 is a hydraulic or pneumatic cylinder, the landing impact can be further reduced by reducing the load of the airframe 11 through an instantaneous compression operation when the airframe 11 lands on the landing surface 111. Here, the landing pad 110 or the inclination drive unit 120 may be equipped with a shock absorber to reduce the landing impact when the airframe 11 lands on the landing surface 111.

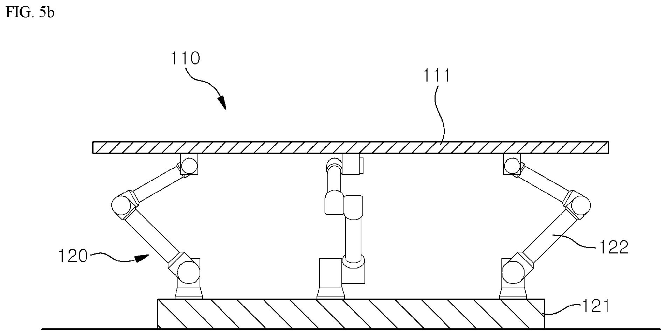

In addition, the actuator 122 can be configured as a multi-joint robot arm structure in which a plurality of actuators are installed spaced apart along the perimeter of the landing pad 110 as shown in FIG. 5b in addition to the cylinder structure and are extended between the base plate 121 and the landing pad 110, so that the landing pad 110 can be moved in a roll motion, a tilt motion, a yaw motion, a horizontal movement motion, and an up and down motion by adjusting the position of the top end of the robot arm that supports the lower part of the landing pad 110 according to the rotation of each joint.

In addition, although not shown, the actuator 122 may be configured to enable various operations, including adjusting the horizontal inclination of the landing pad 110, by including a drive motor whose rotation angle is controlled according to a control signal of a drive control unit 140 and a rack and pinion structure that operates with the rotational force of the drive motor.

In addition, as illustrated in FIG. 3, it is preferable that the inclination drive unit 120 be positioned lower than the ground 20 so that the landing pad 110 can be positioned corresponding level to the ground 20. For example, the inclination drive unit 120 may be positioned in an underground space that is opened upward to the ground 20 so that the landing pad 110 can be positioned on the same line as the ground 20.

Meanwhile, the ground communication unit 130 receives the airframe inclination detection signal detected by the airframe inclination detection unit 15 disposed on the rotary wing aircraft 10 and transmits it to the drive control unit 140. Here, in general, in the case of the rotary wing aircraft 10, the airframe inclination detection unit 15, such as a gyro sensor or inclination sensor, which outputs an electrical detection signal differentiated according to the degree of inclination of the airframe 11 in order to maintain a stable attitude of the airframe 11, is provided. The ground communication unit 130 is wirelessly connected to the aircraft communication unit 16 disposed on the rotary wing aircraft 10 and can use the airframe inclination detection signal output from the airframe inclination detection unit 15 as basic data for determining the inclined state of the airframe 11.

In addition, the ground communication unit 130 is configured as part of a GCS(Ground Control System) for flight control of a rotary wing aircraft 10 and can also receive an airframe inclination detection signal acquired for flight control.

In addition, the airframe inclination detection unit 15 may be a sensor additionally mounted on the airframe 11 for horizontal inclination control of the landing pad 110, rather than a sensor mounted for flight control of the rotary wing aircraft 10.

The above drive control unit 140 is configured to control the inclination drive unit 120 so that the horizontal inclination of the landing pad 110 is adjusted to a set inclination state, and by controlling the inclination drive unit 120 in such a way that the landing pad 110 is inclined in the same direction as the inclination direction of the airframe 11 of the rotary wing aircraft 10 by using the airframe inclination detection signal, the horizontal inclination of the landing pad 110 is adjusted, and each landing gear 12 arranged at the lower part of the rotary wing aircraft 10 is guided to come into contact with the landing surface 111 of the landing pad 110 at the same timing.

Here, the drive control unit 140 controls each actuator 122 individually according to the received airframe inclination detection signal so that the horizontal inclination of the landing pad 110 is adjusted while the landing pad 110 performs roll and tilt operations by the extension and contraction operation of each actuator 122 provided in the inclination drive unit 120, thereby enabling precise and rapid adjustment of the horizontal inclination of the landing pad 110.

In addition, the drive control unit 140 stores control data values that are required to individually drive each actuator 122 so that the horizontal inclination of the landing pad 110 should correspond to the horizontal inclination of the airframe 11 for each airframe inclination detection signal of the airframe inclination detection unit 15, and controls each actuator 122 by reading out the corresponding control data values according to the received airframe inclination detection signal.

Through the combined configuration of the landing gear 110, the inclination drive unit 120, the ground communication unit 130, and the drive control unit 140 as described above, the landing impact transmitted to the airframe 11 can be significantly reduced by dispersing the landing impact as each landing gear 12 comes into contact with the landing surface 111 at the same timing, and the phenomenon of the airframe 11 overturning when landing in an inclined state can be prevented in advance.

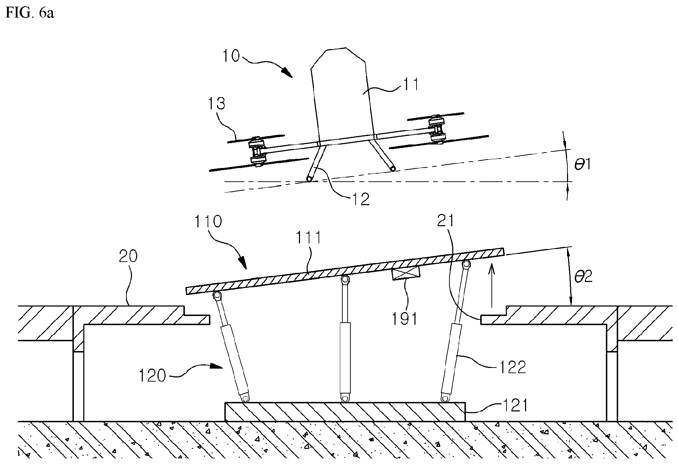

In addition, as illustrated in FIG. 6a, the low-impact landing system for a rotary wing aircraft according to a preferred embodiment of the invention may further include a landing pad inclination detection unit 191 to more precisely control the horizontal inclination of the landing pad 110. The landing pad inclination detection unit 191 is disposed on the landing pad 110 or the inclination drive unit 120 and outputs a detection signal necessary to calculate the landing pad inclination angle (θ2) at which the landing pad 110 is inclined with respect to the horizontal plane. Here, the landing gear inclination detection unit 191 is composed of a gyro sensor or an inclination sensor and can output a detection signal that detects a state in which the landing gear 110 is inclined with respect to the horizontal plane when placed on the landing gear 110, and is composed of a detection sensor that detects the extended length of each actuator 122 or a detection sensor that detects the top position of each actuator 122 and can output a detection signal that detects the operating state of each actuator 122 when placed on the inclination drive unit 120.

In addition, the drive control unit 140 receives the airframe inclination detection signal of the airframe inclination detection unit 15 to calculate the aircraft inclination angle (θ1) at which the airframe 11 is inclined with respect to the horizontal plane, receives the detection signal of the landing pad inclination detection unit 191 to calculate the landing pad inclination angle (θ2), and can individually control each actuator 122 of the inclination drive unit 120 so that the landing pad inclination angle (θ2) becomes equal to the aircraft inclination angle (θ1).

For example, as in Fig. 6a, when the aircraft inclination angle (θ1) calculated in a state where the airframe 11 is inclined to the left is 7 degrees, each actuator 122 is controlled so that the landing pad inclination angle (θ2) calculated through a detection signal detected by the landing pad inclination detection unit 191 becomes 7 degrees, thereby causing the landing surface 111 to be inclined to the left.

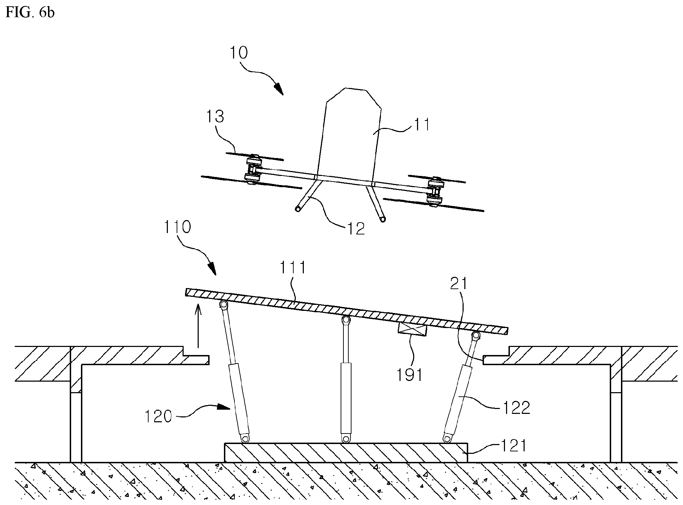

On the other hand, when the aircraft inclination angle (θ1) calculated in a state where the airframe 11 is inclined to the right as in Fig. 6b is 5 degrees, each actuator 122 is controlled so that the landing pad inclination angle (θ2) calculated through the detection signal detected by the landing pad inclination detection unit 191 becomes 5 degrees, thereby causing the landing surface 111 to be inclined to the right. In addition, since the inclination of the airframe 11 and the inclination of the landing surface 111 can be synchronized in real time, the horizontal inclination of the landing surface 111 can be precisely controlled.

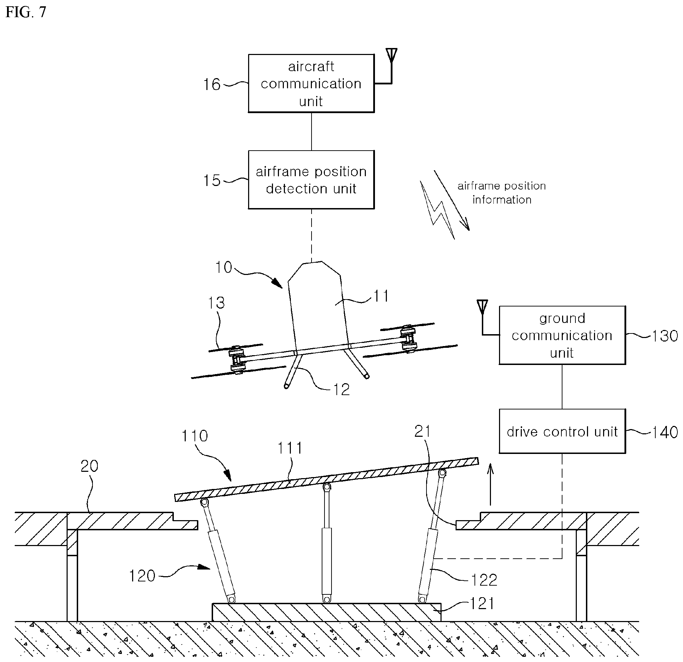

Meanwhile, referring to FIG. 7, the ground communication unit 130 receives the aircraft location information of the airframe 11 detected by the aircraft location detection unit 17 on the rotary wing aircraft 10. The aircraft location detection unit 17 may be a GPS module, a lidar sensor, and an altimeter, or a detection means in which a plurality of these are combined, which are generally provided for flight control of the rotary wing aircraft 10. Accordingly, the aircraft location information may be a GPS signal detected by the GPS module, distance information between the airframe 11 and the landing pad 110 detected by the lidar sensor, or altitude information detected by the altimeter.

Here, the drive control unit 140 starts controlling the inclination drive unit 120 when the rotary wing aircraft 10 approaches the landing pad 110 within a set distance based on the received airframe position information of the airframe 11, and individually controls each actuator 122 so that the landing pad 110 moves horizontally by the extension and contraction of each actuator 122 based on the received airframe position information, and the landing gear 12 of the rotary wing aircraft 10 lands toward the center of the landing surface 111. Accordingly, it is possible to prevent the rotary wing aircraft 10 from landing on the outer portion of the landing pad 110 or on the ground 20 separated from the landing pad 110, and to prevent the load of the airframe 11 from being applied unevenly to the landing pad 110.

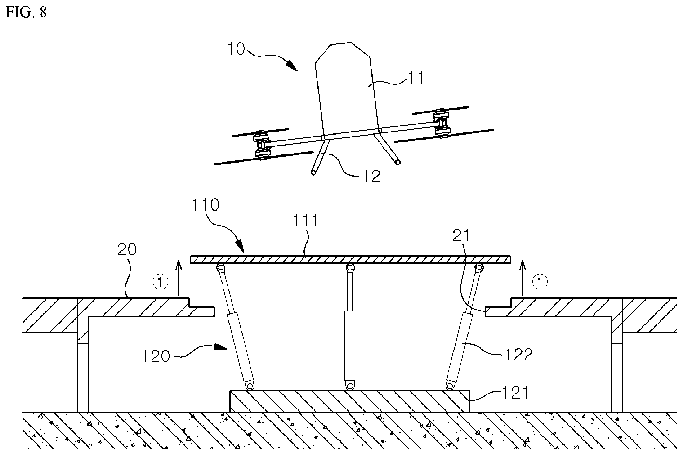

Meanwhile, as illustrated in Fig. 8, the landing pad 110 is formed to be relatively larger than or of a size corresponding to the opening 21 formed on the ground 20, so that no gap is created between the landing pad 110 and the opening 21, thereby preventing the legs of a person getting off the rotary wing aircraft 10 from falling into the gap. In addition, the ground communication unit 130 receives aircraft location information detected by the aircraft location detection unit 17 arranged on the rotary wing aircraft 10.

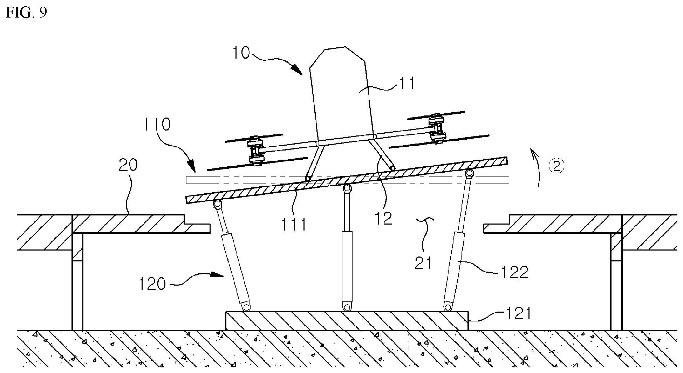

When the rotary wing aircraft 10 approaches the landing pad 110 within a set distance based on the airframe position information of the received airframe position detection unit 17, as shown in FIG. 8, the drive control unit 140 ascends the landing pad 110 from the same level of the ground 20 to the set height (①), and as shown in FIG. 9, the horizontal inclination of the landing pad 110 is adjusted based on the airframe inclination detection signal of the airframe inclination detection unit 15 (②) so that each landing gear 12 comes into contact with the landing surface 111 at the same timing.

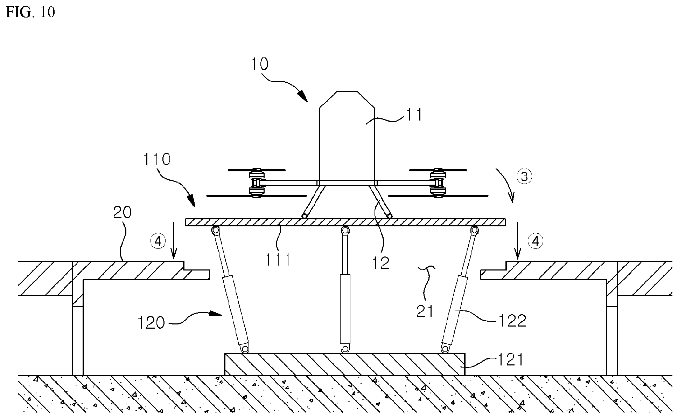

In addition, as shown in FIG. 10, when the rotary wing aircraft 10 lands on the landing pad 110, each actuator 122 can be controlled so that the landing pad 110 becomes horizontal (③) and descends (④) to be positioned on the same line as the ground 20. Therefore, there is no need for a user ground worker or pilot to operate the landing pad 110 to match the timing at which the landing pad 110 should be driven according to the approach of the rotary wing aircraft 10, and the horizontal inclination of the landing pad 110 can be adjusted to prevent the landing pad 110 from coming into contact with the opening 21.

Here, although not shown, the landing pad 110 or the rotary wing aircraft 10 may be equipped with a landing detection sensor that detects the landing of the rotary wing aircraft 10 and outputs a landing detection signal, and the drive control unit 140 may use the received landing detection signal to determine the timing for adjusting the inclined landing pad 110 to a horizontal state.

Meanwhile, as described above, the horizontal inclination of the landing pad 110 is adjusted to follow the horizontal inclination of the airframe 11. However, if the horizontal inclination changing speed of the airframe 11 is faster than the driving speed of the inclination drive unit 120 due to the influence of the wind, each landing gear 12 may come into contact with the landing surface 111 at different timings.

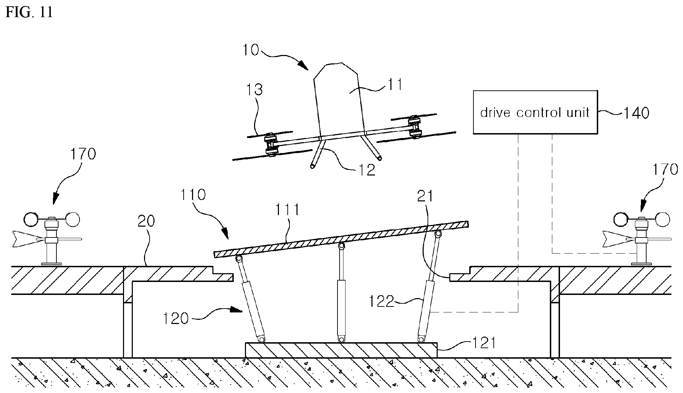

Accordingly, in a low-impact landing system for a rotary wing aircraft according to a preferred embodiment of the invention, as shown in FIG. 11, a wind sensor 170 is provided so that the horizontal inclination of the landing pad 110 can be adjusted in a direction in which the airframe 11 can be inclined further just before landing due to the wind applied to the airframe 11.

To this end, the wind detection unit 170 is installed on the ground 20 a certain distance away from the landing pad 110 to detect the wind direction and wind speed applied toward the landing pad 110, and the drive control unit 140 can drive and control the inclination drive unit 120 so that the horizontal inclination of the landing pad 110 is further inclined in the direction in which the airframe 11 of the rotary wing aircraft 10 is predicted to inclination due to the wind according to the wind detection signal received from the wind detection unit 170. Here, it is preferable that the wind detection units 170 are provided in multiple pieces spaced apart from each other around the landing pad 110 to detect wind blowing from all directions.

In addition, the drive control unit 140 can determine the direction in which to incline the landing pad 110 using the wind direction information included in the wind detection signal and can determine the degree to which to incline the landing pad 110 using the wind speed information included in the wind detection signal. In this way, even if wind is applied to the airframe 11 at the moment when the landing gear 12 is about to land on the landing surface 111, each landing gear 12 can be guided to come into contact with the landing surface 111 at the same time.

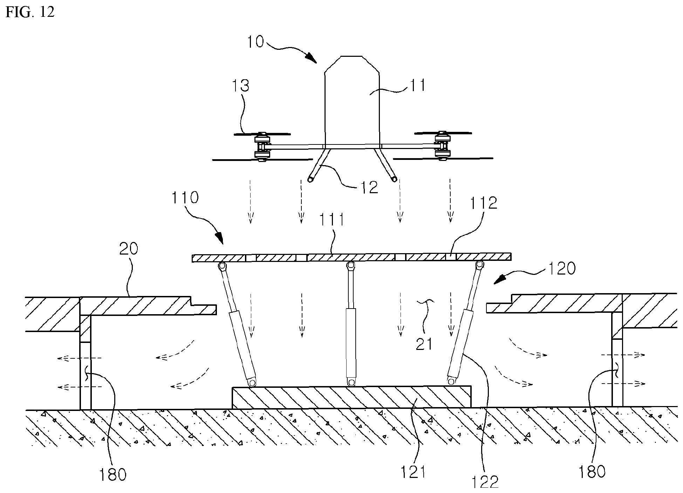

Meanwhile, when the rotary wing aircraft 10 approaches the landing surface 111 while descending to land on the landing pad 110, the wind generated by the rotation of the propeller 13 is reflected upward by the landing surface 111 and applied to the rotary wing aircraft 10, which may cause the movement of the airframe 11 to become unstable. Accordingly, as illustrated in FIG. 12, exhaust holes 112 are formed on the landing pad 110 to discharge the airflow generated by the rotation of the propeller 13 of the rotary wing aircraft 10 and blowing against the landing surface 111 to the lower part of the landing pad 110, and an exhaust window 180 is arranged in the lower space of the landing pad 110 so that the airflow discharged downward through the exhaust holes 112 can be discharged to the outside. Accordingly, the shaking of body generated during landing can be minimized as the wind reflected upward by the landing surface 111 of the landing pad 110 is applied to the airframe 11.

The invention described above is not limited to the above-described embodiments and the attached drawings, and it will be apparent to a person skilled in the art to which the invention pertains that various substitutions, modifications, and changes are possible within a scope of the technical spirit of the invention.

## Claims

1. A low-impact landing system for a rotary wing aircraft for reducing landing impact transmitted to the aircraft airframe 11 when the rotary wing aircraft 10 lands, which comprises: a landing pad 110 having a landing surface 111 formed on the upper portion for landing the rotary wing aircraft 10; an inclination drive unit120 positioned at a lower position of the landing pad 110 to support the landing pad 110 and drive according to a control signal to adjust the horizontal inclination of the landing pad 110; a ground communication unit 130 for receiving an airframe inclination detection signal detected by an airframe inclination detection unit 15 positioned on the rotary wing aircraft 10; and a drive control unit 140 that controls the inclination drive unit120 according to the airframe inclination detection signal so that each landing gear 12 of the rotary wing aircraft 10 contacts the landing surface 111 of the landing pad 110 at the same timing.

2. A low-impact landing system for a rotary wing aircraft of claim 1, wherein the inclination drive unit120 includes a base plate 121 that is fixedly installed and spaced downward from a landing pad 110, and a plurality of actuators 122 that are installed spaced apart from each other along the perimeter of the landing pad 110 and are extended vertically between the base plate 121 and the landing pad 110 to actuate the landing pad 110 up and down while performing an extension and contraction operation according to a control signal of a drive control unit 140, and the drive control unit 140 individually controls each actuator 122 so that the landing pad 110 performs a roll operation and a tilt operation to be adjusted horizontally by the extension and contraction operation of each actuator 122 according to a received airframe inclination detection signal.

3. A low-impact landing system for a rotary wing aircraft of claim 2, wherein the landing pad inclination detection unit 191 is further included, which is arranged on the landing pad 110 or the inclination drive unit 120 and outputs a detection signal necessary to calculate a landing pad inclination angle (θ2) at which the landing pad 110 is inclining with respect to the horizontal plane, and the drive control unit 140 receives the airframe inclination detection signal of the airframe inclination detection unit 15 to calculate the airframe inclination angle (θ1) at which the airframe 11 is inclining with respect to the horizontal plane, receives the detection signal of the landing pad inclination detection unit 191 to calculate the landing pad inclination angle (θ2), and individually controls each actuator 122 of the inclination drive unit 120 so that the landing pad inclination angle (θ2) becomes equal to the airframe inclination angle (θ1).

4. A low-impact landing system for a rotary wing aircraft of claim 3, wherein the ground communication unit 130 receives the airframe position information of the airframe 11 detected by the airframe position detection unit 17 arranged on the rotary wing aircraft 10, and the drive control unit 140 starts controlling the inclination drive unit 120 when the rotary wing aircraft 10 approaches the landing pad 110 within a set distance according to the received airframe position information of the airframe 11, and individually controls each actuator 122 so that the landing pad 110 should move horizontally by the extension and contraction of each actuator 122 according to the received airframe position information, and the landing gear 12 of the rotary wing aircraft 10 should land toward the center position of the landing surface 111.

5. A low-impact landing system for a rotary wing aircraft of claim 2, wherein the landing pad 110 has a size that is relatively larger than or corresponding to the opening 21 formed in the ground 20, the ground communication unit 130 receives the airframe position information detected by the airframe position detection unit 17 arranged in the rotary wing aircraft 10, and the drive control unit 140 controls the landing pad 110 arranged horizontally on the same line as the ground 20 to rise to a set height when the rotary wing aircraft 10 approaches the landing pad 110 within a set distance according to the airframe position information of the received airframe position detection unit 17, and the horizontal inclination of the landing pad 110 is adjusted according to the airframe inclination detection signal of the airframe inclination detection unit 15 so that each landing gear 12 comes into contact with the landing surface 111 at the same timing, and when the rotary wing aircraft 10 lands on the landing pad 110, each actuator 122 is controlled to descend so that the landing pad 110 should become horizontal and be positioned on the same line as the ground 20.

6. A low-impact landing system for a rotary wing aircraft of claim 1, wherein it further includes a wind detection unit 170 installed on the ground 20 spaced a certain distance from the landing pad 110 to detect the wind direction and wind speed applied toward the landing pad 110, and the drive control unit 140 controls the inclination drive unit 120 to further incline the horizontal level of the landing pad 110 in the direction in which the airframe 11 of the rotary wing aircraft 10 is predicted to incline due to the wind according to the wind detection signal received from the wind detection unit 170.

7. A low-impact landing system for a rotary wing aircraft of claim 1, wherein exhaust holes 112 are formed on the landing pad 110 to discharge the air wind generated by the rotation of the propeller 13 provided on the rotary wing aircraft 10 and directed the air wind being toward the landing surface 111 to the lower part of the landing pad 110, and an exhaust window 180 is further formed to discharge the air wind discharged downward through the exhaust holes 112 to the outside, which is arranged in the lower space of the landing pad 110.
